# FASCICULE DE BREVET EUROPEEN

(11) **EP 1 191 376 B1**
(45) Date de publication et mention de la délivrance du brevet: **19.11.2008**
(21) Numéro de dépôt: 01402362.6
(22) Date de dépôt: 13.09.2001
(51) Int. Cl.: G02B 6/44

(54) **Cable à fibres optiques perfectionné et procédé de fabrication de ce cable**
Verbesserte optische Faser-Kabel und zugehöriges Herstellungsverfahren
Improved optical fibers cable and fabrication method of such a cable

(30) Priorité: 21.09.2000 FR 0012044
(43) Date de publication de la demande: 27.03.2002
(73) Titulaire: Draka Comteq B.V., 1083 HJ Amsterdam (NL)
(72) Inventeur: Bourget, Vincent, 62200 Boulogne sur Mer (FR)
(74) Mandataire: Blokland, Arie

(56) Documents cités:
- EP-A- 0 033 123
- EP-A- 0 846 970

## Description

La présente invention concerne un câble à fibres optiques perfectionné et un procédé de fabrication de ce câble.

Les câbles à fibres optiques, appelés par la suite câbles optiques, présentent habituellement trois types de structure.

Selon un premier type de structure, le câble optique comprend un porteur filiforme central autour du quel sont assemblés des tubes en hélice ou en SZ dans lesquels sont logées des fibre optiques. L'assemblage de tubes est revêtu d'une gaine. Dans ce premier type de structure, les tubes contenant les fibres optiques sont délimités par des parois relativement épaisses et rigides en matériau synthétique. Des déplacements relatifs entre les fibres optiques et les tubes qui les contiennent sont possibles. Des câbles présentant une structure du premier type sont décrits par exemple dans les documents US - A-4366667 et EP-A-0846970.

Les documents EP 0844 970 A1 et JP 57141606 décrivent tous deux un câble à fibres optiques comprenant un assemblage d'au moins deux tubes souples dans lesquels sont logées des fibres optiques, une gaine enveloppant cet assemblage de tubes, les tubes étant solidarisés entre eux par adhérence.

Selon un deuxième type de structure, le câble optique comprend un tube unique, appelé habituellement « uni-tube », en matériau synthétique, dans lequel sont logées des fibre optiques et, le cas échéant, des rubans éventuellement assemblés entre eux en hélice. Cet uni-tube est revêtu d'une gaine délimitée par une paroi dans laquelle sont éventuellement noyés des porteurs filiformes.

Selon le troisième type de structure, le câble optique comprend des tubes en matériau synthétique, dans lesquels sont logées des fibre optiques, assemblés entre eux en hélice ou en SZ. L'assemblage de tubes est revêtu d'une gaine délimitée par une paroi dans laquelle sont noyés des porteurs filiformes . Dans ce troisième type de structure, les tubes contenant les fibres optiques, relativement fins et souples, enserrent les fibres optiques qu'il contiennent en empêchant pratiquement tout déplacement relatif entre les fibres optiques et les tubes qui les contiennent.

Habituellement, dans les trois types de structure, la gaine, en matériau synthétique, est extrudée autour de ce qui est appelé couramment l'âme optique (cette âme optique comprend notamment, dans le premier type de structure : le porteur filiforme et les tubes, dans le deuxième type de structure : l'uni-tube et les éventuels rubans et dans le troisième type de structure : l'assemblage de tubes).

Dans certaines installations, les câbles sont agencés le long de chemins comportant des tronçons verticaux. Or, l'assemblage de tubes en SZ d'un tronçon de câble optique vertical est susceptible de se défaire sous l'effet de la gravité, chaque tube ayant en effet tendance à se dérouler pour s'étendre de façon rectiligne verticalement. Les risques d'amorçage de ce phénomène indésirable sont particulièrement importants dans les zones d'inversion de sens d'enroulement d'un tube s'étendant en SZ.

Un câble optique de structure du premier type comporte habituellement un filin de retenue des tubes permettant notamment d'éviter cet inconvénient. Les contraintes de serrage exercées par le filin sur les tubes ne sont pas transmises aux fibres optiques du fait de la relative rigidité de ces tubes.

Dans le cas d'un câble optique de structure du troisième type, le recours à un filin de blocage pour éviter l'inconvénient ci-dessus ne donne pas satisfaction. En effet, les tubes d'un câble optique de structure du troisième type sont relativement fins si bien que les contraintes de serrage exercées par le filin sur les tubes sont transmises aux fibres optiques. Celles-ci subissent ainsi des contraintes perturbant leurs performances optiques.

L'invention a pour but d'éviter les conséquences indésirables de la gravité dans les tronçons de câble optique verticaux présentant une structure du troisième type.

A cet effet, l'invention a pour objet un câble à fibres optiques du type comprenant un assemblage d'au moins deux tubes souples dans lesquels sont logés des fibres optiques, une gaine enveloppant cet assemblage de tubes et au moins un porteur filiforme agencé à la périphérie de l'assemblage de tubes, caractérisé en ce qu'il comprend des mèches (20) de renfort mécanique, de préférence en aramide s'étendant entre les tubes (12) et la gaine (16) suivant un assemblage annulaire, de préférence en hélice, les tubes (12) enserant les fibres optiques (14) sont solidarisés entre eux par adhérence et le câble ne comportant pas d'élément d'ancrage situé au centre dudit câble.

Suivant d'autres caractéristiques de ce câble optique :
- la gaine est fabriquée en polyéthylène et les tubes sont fabriqués en polychlorure de vinyle (PVC) ou en élastomère thermoplastique à segments souples diol ;
- les tubes s'étendent dans la gaine suivant un assemblage en hélice ou en SZ ;
- le câble optique comprend des mèches de renfort mécanique, de préférence en aramide, s'étendant entre les tubes et la gaine suivant un assemblage annulaire, de préférence en hélice ;
- le câble optique comprend des éléments d'étanchéité tels qu'un ruban d'étanchéité s'étendant entre les tubes et la gaine suivant un assemblage annulaire, des éléments gonflants filiformes s'étendant dans la gaine suivant un assemblage entrelacé avec les tubes et/ou une matière de remplissage logée dons les tubes ;
- la gaine est délimitée par une paroi dans laquelle est noyée au moins un porteur filiforme.

L'invention a également pour objet un procédé de fabrication d'un câble à fibres optiques comprenant un assemblage d'au moins deux tubes souples dans lesquels sont logés des fibres optiques, une gaine enveloppant cet assemblage de tubes et au moins un porteur filiforme agencé à la périphérie de l'assemblage de tubes, ce procédé étant du type dans lequel les tubes sont fabriqués en matériau synthétique et la gaine est fabriquée dans un matériau synthétique qui est chauffé et extrudé autour des tubes, **caractérisé en ce que,** lors de l'extrusion de la gaine autour des tubes, la température d'extrusion du matériau de la gaine est réglée pour provoquer l'adhérence des tubes entre eux.

Suivant une autre caractéristique de ce procédé, la gaine est fabriquée en polyéthylène et les tubes sont fabriqués en polychlorure de vinyle (PVC) ou en élastomère thermoplastique à segments souples diol, la température d'extrusion de la gaine étant comprise entre 170 et 240°C.

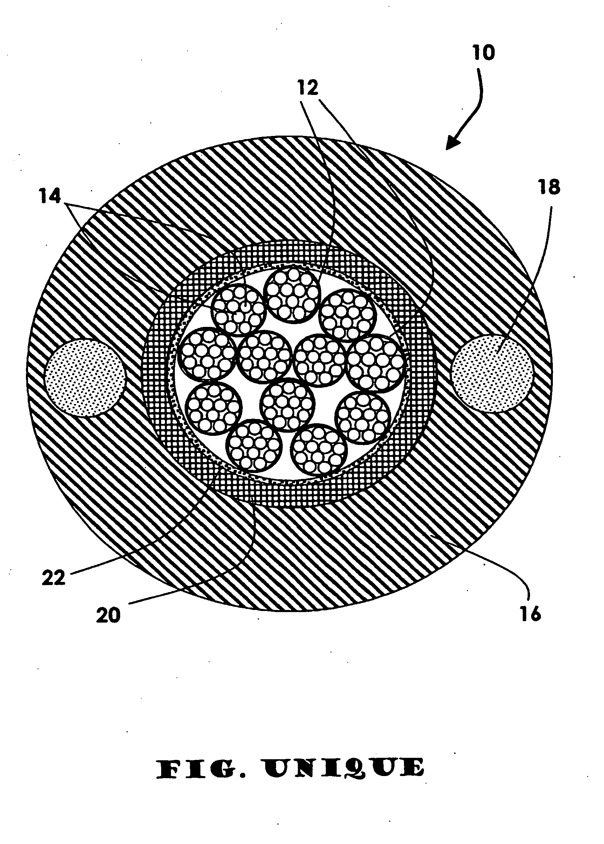

L'invention sera mieux comprise à la lecture de la description qui va suivre, donnée uniquement à titre d'exemple et faite en se référant aux dessins annexés dans lesquels la figure unique représente une vue en coupe transversale d'un câble optique perfectionné selon l'invention.

On a représenté sur la figure unique un câble à fibres optiques selon l'invention, désigné par la référence générale 10.

Ce câble optique 10 comprend un assemblage de tubes souples 12 dans chacun desquels est logé un faisceau de fibres optiques classiques 14. Chaque tube 12 comprend par exemple une douzaine de fibres optiques 14. Toutefois, le nombre de fibres optiques 14 peut être inférieur ou supérieur à douze.

Dans l'exemple illustré, le câble optique 10 comprend douze tubes 12. Toutefois, le nombre de tubes 12 peut être différent, par exemple compris entre sept et douze.

L'assemblage de tubes 12 est revêtu d'une gaine 16. De préférence, les tubes 12 s'étendent dans la gaine 16 suivant un assemblage classique en hélice ou en SZ.

Des éléments filiformes formant renforts de traction, appelés par la suite porteurs 18, sont agencés à la périphérie de l'assemblage de tubes 12. De préférence, le câble optique 10 comprend deux porteurs 18, diamétralement opposés, noyés dans la paroi délimitant la gaine 16. La structure et l'assemblage des porteurs 18 dans la gaine 16 sont classiques.

De préférence, le câble optique 10 comprend des mèches de renfort mécanique 20, par exemple en aramide, s'étendant radialement entre les tubes 12 et la gaine 16 suivant un assemblage annulaire, par exemple en hélice.

De préférence également, le câble optique 10 comprend des éléments d'étanchéité classiques.

De tels éléments d'étanchéité peuvent comprendre un ruban d'étanchéité 22 s'étendant radialement entre les tubes 12 et la gaine 16, plus particulièrement entre les tubes 12 et l'assemblage de mèches de renfort 20, suivant un assemblage classique annulaire.

Les éléments d'étanchéité peuvent également comprendre des éléments gonflants filiformes (non représentés sur la figure) s'étendant dans la gaine 16 suivant un assemblage classique entrelacé avec les tubes 12.

Les éléments d'étanchéité peuvent encore comprendre une matière de remplissage classique logée dans les tubes 12, entre les fibres optiques 14.

De façon classique, la gaine 16 est fabriquée dans un matériau synthétique qui est chauffé et extrudé autour des tubes 12, ces derniers étant également fabriqués dans un matériau synthétique. On notera que la paroi des tubes 12 est relativement fine comme cela est le cas habituellement pour les tubes 12 d'un câble optique du type à porteurs agencés à la périphérie de l'assemblage de tubes.

Selon l'invention, les tubes 12 sont solidarisés entre eux par adhérence entre eux. Ceci est obtenu lors de l'extrusion de la gaine 16 autour de ces tubes 12 en réglant la température d'extrusion du matériau de la gaine 16 de façon à provoquer l'adhérence des tubes 12 entre eux.

Le matériau de la gaine 16 chauffé lors de l'extrusion fournit les calories nécessaires pour provoquer l'adhérence des tubes entre eux.

On choisira le matériau de la gaine 16 de façon à pouvoir chauffer celui-ci à une température sélectionnée qui est, d'une part, satisfaisante pour réaliser l'extrusion de la gaine de façon optimale et, d'autre part, suffisante pour provoquer l'adhérence des tubes 12. De même, on choisira le matériau des tubes 12 de façon que ces tubes 12, chauffés par les calories émises par la gaine extrudée 16 à la température sélectionnée, adhèrent entre eux sans pour autant fondre sous l'effet de cette chaleur.

Ainsi, la gaine est fabriquée de préférence en polyéthylène, en particulier haute densité, et les tubes 12 sont fabriqués en polychlorure de vinyle (PVC) ou en élastomère thermoplastique à segments souples diol.

On entend par « élastomère thermoplastique à segments souples diol » un copolymère comportant des segments qui peuvent être des blocs polyéther ou polymèrediol.

Par exemple, l'élastomère thermoplastique à segments souples diol est choisi dans le groupe comprenant :
(i) les polyétheresters, par exemple comprenant des séquences polyéther à extrémités hydroxy liées à des séquences polyester à extrémités acides, cette structure pouvant aussi comprendre des diols (par exemple butanediol-1,4) ;
(ii) les polyuréthanneéthers, par exemple comprenant des séquences polyéther à extrémités hydroxy liées à des diisocyanates par des fonctions uréthannes ;
(iii) les polyuréthanneesters, par exemple comprenant des séquences polyester à extrémités hydroxy liées à des diisocyanates par des fonctions uréthannes ;
(iv) les polyuréthanneétheresters, par exemple comprenant des séquences polyester et des séquences polyéther à extrémités hydroxy, ces séquences étant liées à des restes diisocyanates par des fonctions uréthanne ;
(v) les polyétheramides, des polyéthers à séquences polyamides, par exemple obtenus par réaction entre des séquences polyamides à bouts de chaîne diamine avec des séquences polyoxyalkylènes à bouts de chaîne dicarboxyliques ou entre des séquences polyamides à bouts de chaîne diamine ou entre des séquences polyamides à bouts de chaîne dicarboxyliques avec des polyétherdiols, les polyétheraramides obtenus étant alors des polyétheresteramides.

En particulier, les polyétheresters sont des copolyesters thermoplastiques élastomères. Un exemple d'un produit commercial est le polymère Hytrel ®, de Dupont. L'acronyme international pour ces élastomères thermoplastiques est TEEE (élastomère éther-ester thermoplastique).

On notera que les tubes 12 en élastomère thermoplastique à segments souples diol se déchirent assez facilement pour permettre un accès aisé aux fibres optiques 14 contenues dans ces tubes 12.

Par ailleurs, les polyuréthannes thermoplastiques élastomères ou TPU sont des copolymères à base polyuréthanne qui peuvent être obtenus par réaction conjointe d'un polymèrediol (ou macroglycol avec un poids moléculaire par exemple compris entre 1000 et 3500) et éventuellement un diol (ou allongeur de chaîne de poids moléculaire faible, généralement inférieur à 300) sur un diisocyanate.

Des exemples de produits commerciaux sont Elastollan® 1185 (PU-éther), Elastollan ® 1190 (PU-éther), Elastollan ® C85 (PU-ester), Elastollan® C90 (PU-ester), et Desmopan ® 588 (PU-étherester), Desmopan ® 385 (PU-étherester), les polymères de la gamme Elastollan ® étant disponibles chez BASF et ceux de la gamme Desmopan ® chez Bayer.

A titre d'exemple, la gaine 16 en polyéthylène est chauffée lors de son extrusion autour de l'assemblage des tubes 12 à une température comprise entre 170 et 240°C, de préférence entre 200 et 220°C. A cette température, la gaine 16 dégage vers les tubes 12 une chaleur suffisante pour traverser les éventuelles couches de mèches de renfort ou d'éléments d'étanchéité et provoquer l'adhérence des tubes 12 entre eux sans pour autant provoquer leur fusion.

Parmi les avantages de l'invention, on notera que, grâce à l'adhérence des tubes 12 entre eux, l'assemblage de ces tubes 12 en hélice ou en SZ dans un tronçon de câble optique 10 vertical n'est pas susceptible de se défaire sous l'effet de la gravité. Toutefois, malgré cette adhérence, les tubes 12 peuvent être facilement séparés les uns des autres en exerçant sur chacun d'eux un effort relativement faible ne dépassant généralement pas 1 Newton, ce qui permet un accès facile aux fibres optiques lors de leur connexion.

## Revendications

1. Câble à fibres optiques du type comprenant un assemblage d'au moins deux tubes souples (12) dans lesquels sont logées des fibres optiques (14), une gaine (16) enveloppant cet assemblage de tubes (12) et au moins un porteur filiforme (18) agencé à la périphérie de l'assemblage de tubes (12), **caractérisé en ce qu'**il comprend des mèches (20) de renfort mécanique, de préférence en aramide, s'étendant entre les tubes (12) et la gaine (16) suivant un assemblage annulaire, de préférence en hélice, les tubes (12) enserant les fibres optiques (14) sont solidarisés entre eux par adhérence et le câble ne comportant pas d'élément d'ancrage situé au centre dudit câble.

2. Câble selon la revendication 1, **caractérisé en ce que** la gaine (16) est fabriquée en polyéthylène et les tubes (12) sont fabriqués en polychlorure de vinyle (PVC)
ou en élastomère thermoplastique à segments souples diol.

3. Câble selon la revendication 1 ou 2, **caractérisé en ce que** les tubes (12) s'étendent dans la gaine (16) suivant un assemblage en hélice ou en SZ.

4. Câble selon l'une quelconque des revendications précédentes, **caractérisé en ce qu'**il comprend des éléments d'étanchéité tels qu'un ruban d'étanchéité s'étendant entre les tubes (12) et la gaine (16) suivant un assemblage annulaire, des éléments gonflants filiformes s'étendant dans la gaine suivant un assemblage entrelacé avec les tubes (12) et/ou une matière de remplissage logée dans les tubes (12).

5. Câble selon l'une quelconque des revendications précédentes, **caractérisé en ce que** la gaine (16) est délimitée par une paroi dans laquelle est noyée au moins un porteur filiforme (18).

6. Procédé de fabrication d'un câble à fibres optiques comprenant un assemblage d'au moins deux tubes souples (12) dans lesquels sont logés des fibres optiques (14), une gaine (16) enveloppant cet assemblage de tubes (12) de mèches (20) de renfort mécanique s'étendant entre les tubes (12) et la gaine (16) et au moins un porteur filiforme (18) agencé à la périphérie de l'assemblage de tubes (12), ce procédé étant du type dans lequel les tubes (12) sont fabriqués en matériau synthétique et la gaine (16) est fabriquée dans un matériau synthétique qui est chauffé et extrudé autour des tubes, **caractérisé en ce que,** lors de l'extrusion de la gaine (16) autour des tubes (12) et des mèches (20) de renfort mécanique, la température d'extrusion du matériau de la gaine (16) est réglée pour provoquer l'adhérence des tubes (12) entre eux.

7. Procédé selon la revendication 6, **caractérisé en ce que** la gaine (16) est fabriquée en polyéthylène et les tubes (12) sont fabriqués en polychlorure de vinyle (PVC) ou en élastomère thermoplastique à segments souples diol, la température d'extrusion de la gaine (16) étant comprise entre 170 et 240°C, de préférence entre 200 et 220°C.

## Claims

1. Optical fibre cable of the type comprising an arrangement of at least two flexible tubes (12) accommodating optical fibres (14), a jacket (16) enveloping that arrangement of tubes (12), and at least one filamentary strength member (18) provided peripherally of the arrangement of tubes (12), **characterised in that** it comprises mechanical reinforcing strands (20), preferably made of aramid, extending between the tubes (12) and the jacket (16) in an annular arrangement, preferably helically, the tubes (12) which enclose the optical fibres (14) being fixed to one another by adhesion, and the cable containing no anchor element located at the centre of said cable.

2. Cable according to claim 1, **characterised in that** the jacket (16) is made of polyethylene and the tubes (12) are made of polyvinyl chloride (PVC) or of thermoplastic elastomer having flexible diol segments.

3. Cable according to claim 1 or 2, **characterised in that** the tubes (12) extend in the jacket (16) in a helical or SZ arrangement.

4. Cable according to any one of the preceding claims, **characterised in that** it includes waterproofing elements such as a waterproofing tape extending between the tubes (12) and the jacket (16) in an annular arrangement, filamentary swelling elements extending within the jacket in an arrangement interlaced with the tubes (12) and/or a filler material contained in the tubes (12).

5. Cable according to any one of the preceding claims, **characterised in that** the jacket (16) is defined by a wall in which there is embedded at least one filamentary strength member (18).

6. Method of producing an optical fibre cable comprising an arrangement of at least two flexible tubes (12) accommodating optical fibres (14), a jacket (16) enveloping that arrangement of tubes (12), mechanical reinforcing strands (20) extending between the tubes (12) and the jacket (16), and at least one filamentary strength member (18) provided peripherally of the arrangement of tubes (12), that method being of the type wherein the tubes (12) are made from synthetic material and the jacket (16) is made from a synthetic material which is heated and extruded around the tubes, **characterised in that**, during the extrusion of the jacket (16) around the tubes (12) and the mechanical reinforcing strands (20), the extrusion temperature of the material of the jacket (16) is controlled so as to cause adhesion of the tubes (12) to one another.

7. Method according to claim 6, **characterised in that** the jacket (16) is made of polyethylene and the tubes (12) are made of polyvinyl chloride (PVC) or of thermoplastic elastomer having flexible diol segments, the extrusion temperature of the jacket (16) being between 170 and 240°C, preferably between 200 and 220°C, inclusive.

## Patentansprüche

1. Kabel mit optischen Fasern von der Art, welche eine Anordnung von mindestens zwei biegsamen Rohren (12), in welchen optische Fasern (14) beherbergt sind, eine diese Anordnung von Röhren (12) umgebende Hülle (16) und mindestens einen fadenförmigen Träger (18), welcher an dem Rand der Anordnung von Röhren (12) angeordnet ist, umfasst, **dadurch gekennzeichnet, dass** es Strähnen (20) zur mechanischen Verstärkung, bevorzugt aus Aramid, welche sich zwischen den Röhren (12) und der Hülle (16) folgend einer ringförmigen Anordnung, bevorzugt helixförmig, erstrecken, umfasst, wobei die die optischen Fasern (14) einschließenden Röhren (16) durch Aneinanderhaften miteinander verbunden sind und das Kabel kein Ankerelement, welches im Zentrum des Kabels angeordnet ist, umfasst.

2. Kabel gemäß Anspruch 1, **dadurch gekennzeichnet, dass** die Hülle (16) aus Polyethylen gefertigt ist, und dass die Röhren (12) aus Polyvinylchlorid (PVC) oder aus thermoplastischem Elastomer mit biegsamen Diolsegmenten gefertigt sind.

3. Kabel gemäß Anspruch 1 oder 2, **dadurch gekennzeichnet, dass** sich die Röhren (12) in der Hülle (16) folgend einer helixförmigen Anordnung oder einer SZ-Anordnung erstrecken.

4. Kabel gemäß einem der vorhergehenden Ansprüche, **dadurch gekennzeichnet, dass** es Dichtungselemente wie ein Dichtungsband, welche sich folgend einer ringförmigen Anordnung zwischen den Röhren (12) und der Hülle (16) erstrecken, fadenförmige Aufblähelemente, welche sich in der Hülle folgend einer mit den Röhren (12) verwobenen Anordnung erstrecken, und/oder ein in den Röhren (12) angeordnetes Füllmaterial umfasst.

5. Kabel gemäß einem der vorhergehenden Ansprüche, **dadurch gekennzeichnet, dass** die Hülle (16) durch eine Wand begrenzt ist, in welcher mindestens ein fadenförmiger Träger (18) eingebettet ist.

6. Verfahren zur Herstellung eines Kabels mit optischen Fasern, welches eine Anordnung mindestens zweier biegsamer Röhren (12), in welchen optische Fasern (14) angeordnet sind, eine diese Anordnung von Röhren (12) umgebende Hülle (16), Strähnen (20) zur mechanischen Verstärkung, welche sich zwischen den Röhren (12) und der Hülle (16) erstrecken und zumindest einen fadenförmigen Träger (18), welcher am Rand der Anordnung von Röhren (12) angeordnet ist, umfasst, wobei das Verfahren von der Art ist, bei der die Röhren (12) aus synthetischem Material hergestellt werden und die Hülle (16) aus einem synthetischen Material hergestellt wird, welches um die Röhren erhitzt und extrudiert wird, **dadurch gekennzeichnet, dass** bei der Extrudierung der Hülle (16) um die Röhren (12) und die Strähnen (20) zur mechanischen Verstärkung die Extrudiertemperatur des Materials der Hülle (16) gesteuert wird, um eine Haftung der Röhren (12) aneinander hervorzurufen.

7. Verfahren gemäß Anspruch 6, **dadurch gekennzeichnet, dass** die Hülle (16) aus Polyethylen hergestellt wird und die Röhren (12) aus Polyvinylchlorid (PVC) oder aus thermoplastischem Elastomer mit biegsamen Diolsegmenten hergestellt wird, wobei die Extrudiertemperatur der Hülle (16) zwischen 170 und 240°C, bevorzugt zwischen 200 und 220°C, enthalten ist.
